# EUROPEAN PATENT APPLICATION

(11) **EP 2 574 070 A1**
(43) Date of publication of application: **27.03.2013**
(21) Application number: 12176424.5
(22) Date of filing: 13.07.2012
(51) Int. Cl.: H04N 21/422

(54) **Automated environmental feedback control of display system using configurable remote module**

(30) Priority: 23.09.2011 US 201113243361
(71) Applicant: Sony Corporation, Tokyo 108-0075 (JP)
(72) Inventor: Agnihotri, Tanmay, San Diego California 92128 (US); Halakatti, Shekhar, Carlsbad California 92009 (US)
(74) Representative: Jackson, Jonathan Andrew

(57) **Abstract**

A television apparatus is described which performs automated dynamic content playback in response to environmental feedback from a plurality of real time connective and configurable remote external modules. Remote modules may be hosted on a smart device, such as cell phone, smart phone, netbook, notebook, and so forth into which a sensor application is loaded which is configured to communicate with the television. The television detects and can selectively enable external modules, the sensor information from which is analyzed in response to a user profile from which control decisions are made in selecting content to be played back. The image and video media being output by the television, and preferably also its output modes, are changed in response to the information from the external modules.

## Description

This invention pertains generally to television systems, and more particularly to a television having dynamic content control responsive to environmental sensing.

Televisions have proliferated in the last decade, providing a wealth of media material directed toward a broad range of applications. These systems have traditionally relied on receiving a stream of content, such as selected in response to user channel changing and selection of source inputs.

Despite an increase in the number of sources for media content, the basic paradigm of television systems has remained unchanged.

Accordingly, the present invention provides a different paradigm for the control of television content which provides a number of benefits.

This system provides dynamic content playback in a television without human interaction based on communication with a plurality of external modules configured for sensing their environment. The multiple sensory modules can be configured and customized in real-time by the user for controlling media content selection and controlling other aspects of the television.

For simplicity of description, the present inventive television apparatus will be referred to as a "dynamic content control television", abbreviated herein as DCC TV. It will be appreciated that a television differs from a display device by way of its integrating a device for selecting content (e.g., such as a radio frequency (RF) tuner). In view of this definition, the present invention is a television apparatus as it incorporates a mechanism for selecting media content, although a specific DCC TV device need not include a conventional radio-frequency tuner.

The inventive DCC TV is preferably configured with a web server interface and an external module engine (EME) which is configured to detect, pair up with, and interact with sensors in the form of multiple remote external modules (EMs), or less preferably at least one external module (EM). The external module engine (EME), as configured according to the invention, has an analysis and decision engine for processing the sensor inputs. In response to communications with authorized EM (e.g., as dynamically selected by the user), the content being displayed is automatically changed, while under certain conditions the system changes the output settings and modes of the television, in response to user profile, usage history, and information received from the respective EMs.

The present invention provides a number of beneficial elements which can be implemented either separately or in any desired combination without departing from the present teachings.

Further aspects and embodiments of the invention will be brought out in the following portions of the specification, wherein the detailed description is for the purpose of fully disclosing preferred embodiments of the invention without placing limitations thereon.

Various respective aspects and features of the invention are defined in the appended claims. Combinations of features from the dependent claims may be combined with features of the independent claims as appropriate and not merely as explicitly set out in the claims.

Embodiments of the invention will now be described with reference to the accompanying drawings, throughout which like parts are referred to by like references, and in which:

The invention will be more fully understood by reference to the following drawings which are for illustrative purposes only:
FIG. 1 is a block diagram of high-level system elements according to an embodiment of the present invention.
FIG. 2 is a block diagram of a television configured for automated environmental feedback display control according to an embodiment of the present invention, showing implementation in a television system on a chip.
FIG. 3 is a flowchart of automated display system control in response to environmental feedback according to an embodiment of the present invention.
FIG. 4 is a flowchart of modular software configuration according to an embodiment of the present invention.
FIG. 5 is a screen shot rendition of external module (EM) detection according to an embodiment of the present invention.
FIG. 6 is a screen shot rendition of an acknowledgement user query prior to scanning for external modules according to an embodiment of the present invention.
FIG. 7 is a screen shot rendition of scanning for external modules (EMs) according to an embodiment of the present invention.
FIG. 8 is a screen shot rendition of scanning results depicting detection of external modules according to an embodiment of the present invention.

The present invention is an apparatus and method of providing automated environmental feedback control of a television using configurable external modules. A television, having at least one video display or associated projector, is controlled automatically by a wireless data acquisition module referred to as an external module, which is linked to the display remotely, such as utilizing internet protocol, wireless (e.g., radio frequency (RF), Bluetooth TM), or other known physical communication medium and protocols. The inventive television provides dynamic content control and is referred to herein as a DCC TV.

It should be appreciated that the term 'remote' as used herein refers to the external module not being collocated with the television, and preferably not being directly wired to the television, wherein a physical relationship of separation exists. By way of example and not limitation, this physical separation may be in different ranges depending on the application, such as by an audience range (e.g., a few feet to tens of feet), a local range (e.g., tens to hundreds of feet) or a dispersed range (e.g., longer range communication distance for instance covered by a cell network).

The remote communicating external modules comprise a new accessory within a new paradigm of television control. The module (or modules) communicate with the DCC TV, to transfer information utilized in controlling the display itself or the contents being displayed thereof. The external modules can incorporate any desired sensor, or combination of sensors, such as audio, temperature, pressure, infrared (IR), motion, location, image sensors (e.g., image / video capture with image processing and / or facial recognition), and other sensor elements without limitation. The sensors allow the external modules to acquire related information, package it, and transmit it back to the DCC TV. It will be appreciated that a single external module could be made with multiple sensor elements, or sensor submodules, all communicating with, or through, the single external module to the display system for obtaining desired functionality according to the invention.

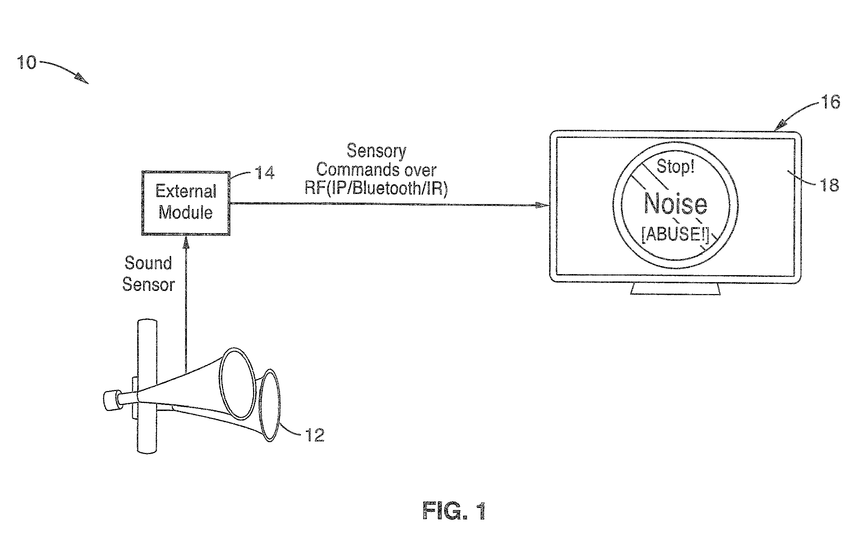

FIG. 1 illustrates an example embodiment 10 in which a sensor 12 is configured in combination with an external module 14 to sense environmental characteristics. External module 14 processes data from sensor 12 to extract relevant information, package it (e.g., normalize, format, and convert to IP packets), and sends it off to the television 16, having a display output 18.

It should be appreciated that the environmental characteristics may include but are not limited to light, sound, time, date, location, weather, temperature, pressure, rain, snow, traffic conditions, location, infrared detection (IR), motion, image sensing, audience presence, number of individuals, composition of audience (e.g., size as general indicator of age, gender, etc.). It should also be recognized that the inventive system can be configured for sensing any external parameters and / or conditions which can be utilized to control content on the DCC TV.

Embodiments of the invention provide external modules which can be readily configured for different functionalities by downloading different application ('app') software to change a given response scenario. For instance installing a sound recognition application (i.e., assuming the EM has an audio sensor) converts the external modules into sensing sound, and performing the necessary processing and control of outputs as selected by the system. Similarly, external modules loaded with temperature application programming can be configured to sense and interpret temperatures and control display responses accordingly.

In at least one embodiment, external modules can be readily implemented on any general purpose smart device configured with internet connectivity, programmatic capability and either having one or more sensors, or configured for connection to one or more sensors. Examples of these general purpose smart devices include smart phones, personal digital assistants, cell phones, netbooks, notebook computers, or similar devices as desired, into which a small application is loaded for registering sensor data, and communicating desired sensor information to a web server within the DCC TV.

In at least one example, an app is loaded on a cell phone or smart phone as an external module to send dynamic content control information to the remote DCC TV in response to information sensed from the cell phone. By way of example and not limitation, consider a temperature sensing application within the smart phone (or cell phone), in which the cell phone (as EM) registers the temperature, interprets the data and transmits the temperature (sensor data) along with select control commands and metadata for the DCC TV. In at least one embodiment, the metadata consists of analog-to-digital (AD) information and / or media content. For instance, in this temperature scenario, as higher temperatures are encountered the video ads selected by the DCC TV for playback increasingly feature cold beverages in response to higher ambient temperatures as sensed by the remote sensing cell phone as external module which functions interoperably with the DCC TV.

In one example embodiment, a DCC TV is utilized for digital signage whose output content is responsive to sensing and processing performed in the external modules. The invention automatically senses relevant ambient conditions, interprets this information, associates the information in relation to a database of selection decisions, and modifies the media and / or mode of output from the inventive television device.

In one example embodiment, the same sensor information can be collected from a plurality of external module devices, such as collecting temperature, motion, and / or location data from a number of roaming devices (e.g., cellular phones configured as external sensor modules), toward controlling dynamic content playback of the DCC TV.

In another example embodiment and / or mode of the system, it is sensed by one or more EMs that there are a high percentage of children in proximity to the front of the display, whereby movie trailers oriented to a young audience are automatically selected and output by the DCC TV system.

In another example embodiment, and / or mode, the system automatically activates closed caption mode in response to a noisy surrounding environment as sensed by one or more EMs.

In one embodiment of using the DCC TV system for digital signage, the content to be displayed is predefined within a database and the advertisements are preferably defined within allotted time slots. The system allows real time tracking of audience presence and allows dynamic changes of content based on the type of audience and / or on environmental conditions, toward increasing business sales revenue for items advertised. It will be appreciated that any of the connected external modules can send sensory data or AD metadata to the DCC TV to provide content control of the advertising.

In another embodiment, in response to detecting a lack of proximal individual (e.g., no viewers, or the number of viewers below a threshold) the system enters a mode of playing movie segments, comedy, news, or other segments which are considered to have the potential to draw an audience. Then as the numbers of people increase, the system intersperses commercial material in response to the composition of the audience.

It will be appreciated that the above descriptions are directed at specific examples of use in select applications.

The external modules according to the invention can be generally considered as being configurable remote sensor modules (e.g., client modules communicating over IP) for controlling dynamic content output of the DCC TV. These configurable external modules may be integrated with existing smart devices as described, such as cell phones, smart phones, personal digital assistants (PDAs), netbooks, notebooks and the like, as well as with consumer electronics (e.g., video equipment, audio equipment, appliances), and so forth in supporting the burgeoning home automation and networked consumer device market.

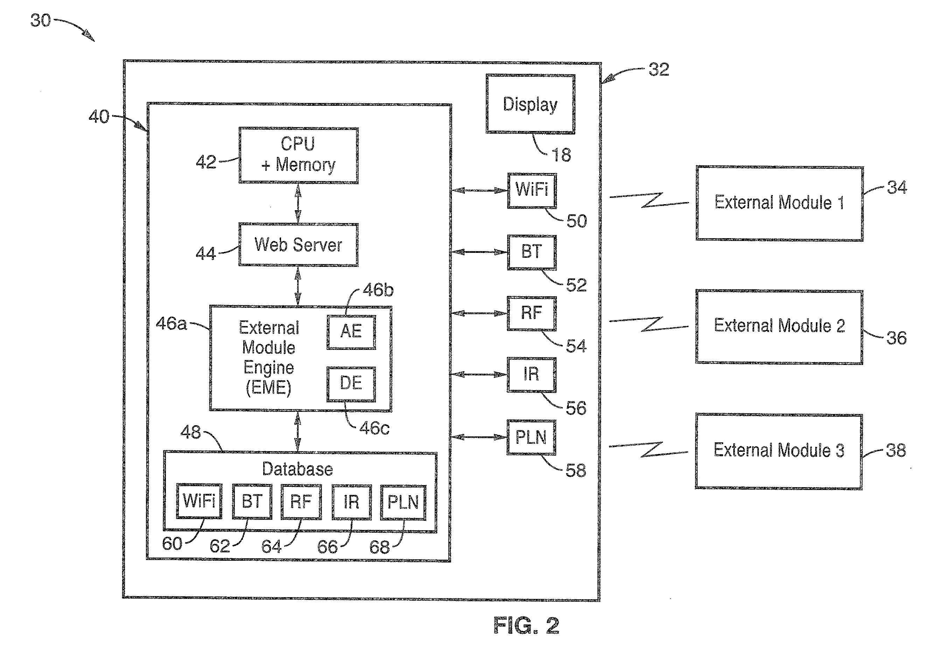

FIG. 2 illustrates an example embodiment 30 of the invention, showing a DCC TV 32, having a display output 13, and configured with a plurality of external modules (EMs) 34, 36, 38 which interoperate with the television 32 to automatically control content playback of the DCC TV system in response to environmental feedback from these client sensor devices that are coupled to a server within the DCC TV.

By way of example, the DCC TV device is shown comprising a system on a chip (SOC) 40 circuit block, such as a TV microprocessor, which controls all display functionality and is herein shown with a central processing unit (CPU), associated memory 42, a web server 44 (Internet server), an external module engine (EME) 46a, and a database 48. EME 46a comprises an analysis engine (AE) 46b and a decision engine (DE) 46c.

It will be appreciated that the CPU 42 may comprise any number of processing elements configured for executing programming from a memory (e.g., external and / or internal memory), including the use of microcontrollers, digital signal processors, programmable logic, and other such electronic elements which can separately or in combination thereof control a sequence of outputs in response to detecting given input conditions with respect to a current or prior state. In addition, the memory may comprise any desired number and type of memory device for retaining programming and data bits. It will be noted that these memories are not considered to comprise merely a signal, but are non-transitory memory devices in that they retain digital information for a desired period of time, irrespective if implemented within a dynamic or static form of memory device.

EME 46a is configured for interfacing with at least one external module (EM), and preferably a plurality of EMs. Each EM is configured with its own processing capability (e.g., one or more computer processors, memory and associated programming), which may comprise any single or combination of processing devices as previously described. It should be noted that the EM devices need not be dedicated to a specific DCC TV, as a single EM device may provide sensory data for any desired number of DCC TV devices.

The sensors and / or processing of the EM devices is particularly well-suited for integration into other remote devices which are already configured with a processor, and may already have one or more integrated sensors. Examples of these smart remote devices include smart phones, cell phones, security systems, appliances, and so forth to operate as the described external modules. Each of these external modules is configured for processing various specific types of sensor information and communicating information and pseudo commands to the DCC TV, such as through any of a plurality of connection types (WiFi) 50, Bluetooth (BT) 52, radio frequency (RF) 54, infrared (IR) 56, power line network (PLN) 58 and other communication types and protocols utilized separately or in any desired combination as desired. It should be appreciated that each of the connections described may comprise a series of different types and / or protocols which are connected in various series (or parallel) connections. For example a WiFi or Bluetooth connection may communicate with, or through, a cell phone (or other device coupled to the cellular network) which extends communication across a cell network through which telephonic, instant messaging and Internet connectivity are provided. In preferred embodiments, the protocols comprise packet-based internet protocols (IP).

It will be seen in FIG. 2 that database 48 includes device entries for each of the connected modules, herein exemplified as WiFi entry 60, Bluetooth entry 62, radio-frequency entry 64, infrared entry 66 and power-line network entry 68.

Each EM can be dynamically connected or disconnected, and is preferably configured with individual programming to allow the communication of sensor information with the DCC TV system and its EME.

The analysis engine (AE) portion of the EME is responsible for scanning and maintaining all external modules through database updating, while it also communicates with the Web server for pulling any new information (e.g., control and sensor data). Analysis by the AE is preferably performed in response to the user profile (or application profile), usage history in combination with the data generated by the specific sensor input being analyzed. The user profile of the DCC TV preferably contains data describing how content is to be changed dynamically by the system in response to sensor input from EMs. For example, this data can be in the form of thresholds and actions within records of a database, or in response to command sequences or high-level programming. These elements are configured for rendering content decisions for a range of input types.

The decision engine (DE) portion of the EME provides flexibility for user setting and customized interaction with the external modules and automatically controls the DCC TV behavior (e.g., output media and configuration) within a user specific application or as specified by the user such as through administrative rights.

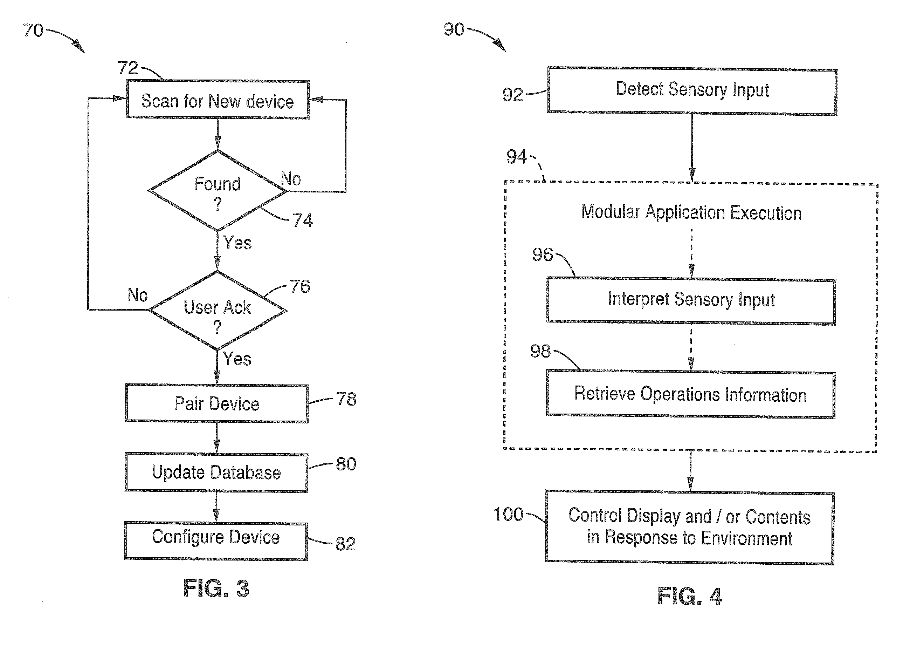

FIG. 3 illustrates a flow diagram of the analysis engine processing 70 utilized in the EME. It will be noted that the device database maintains a list of all currently connected EMs. The inventive DCC TV device scans 72 for new external modules, which when found 74 can be added. Additionally, the scan determines if any existing EMs are missing (unfound) whereby they can be removed. It will be appreciated that this EM determination is preferably made based on scans to determine which EMs are in range, such as performed in response to regular intervals, registered events, random selection, or combinations thereof.

In response to detecting a new EM, the system performs user acknowledgement 76, which acknowledges (e.g., in response to a user interface query response) that this specific EM is allowed to control DCC TV output, after which it performs a pairing of the device 78, updates the database 80 accordingly, and configures 82 the device for one or more specific EM sensing operations. Similarly, when EMs are detected as disconnected, the database is updated to reflect module disconnection.

In one example embodiment, the external module may comprise a video camera (image capture device) system configured for communication with the EME. Image and / or video signals from the camera can be analyzed with video post processing to identify viewer characteristics such as number, composition, age group, gender, motion, and so forth. It will be noted that the video can be processed in the EM with information about the analyzed video (e.g., audience number, composition, characteristics) sent back to the EME, or the video signal itself may be sent back to the EME for all video processing. Where this processing is to be performed can be determined on the fly, during operation of the device, in response to determination of the capabilities of the EM. In response to information extracted from the video (or image) capture by the EM, the inventive DCC TV system dynamically changes its content playback by selecting specific media. There can exist multiple external modules, for example along with an image capture module there may also be a location module (e.g., GPS) for communicating the location of the EM, or multiple EMs, or sensing one or more other conditions, such as sound or climate related parameters. The sensor information is utilized through the EME for controlling the pull of ad content (e.g., locally stored in a memory device or media association with the apparatus) in response for example to operation in a digital signage application.

FIG. 4 illustrates a general flow for DCC TV control 90 in response to environmental feedback from the remote EMs. Sensory input is detected 92 at the external module, and processed within the EME 94 including interpreting sensory input 96 and retrieving operation information 98. It should be appreciated that alternatively, or additionally, processing of the sensor inputs can be performed at the EM device itself, toward reducing the amount of data which needs to be communicated from the EM device client to the server associated with the apparatus and its EME. The DCC TV system in response to communication from the external module controls (modifies) 100 content playback (e.g., the media stream being output), or a combination of media and output configuration, in response to environmental sense inputs from the EM devices.

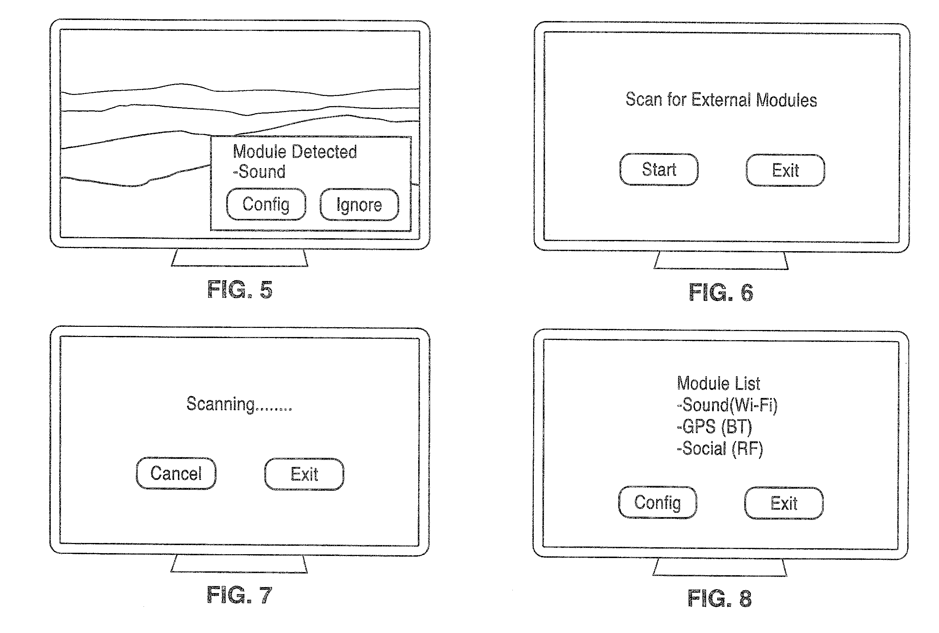

FIG. 5 through FIG. 8 illustrates specific examples of screen shots presented to the user (administrator) within the present invention. One of ordinary skill in the art will appreciate, that for any given communication or acknowledgement function, any desired number of different screens could be provided which have different text, graphics, formats and layouts without departing from the teachings of the present invention.

In FIG. 5 an example screen shot is shown of a user acknowledgement in response to detecting a particular external module, in this case a 'sound' module. The user is queried to decide whether to configure ('Config') the module, or to ignore ('Ignore') this module.

In FIG. 6 an example screen shot is seen in which the user has chosen to force a scan for external modules, and can either start ('Start') the scan, or exit ('Exit') the process without performing a scan.

In FIG. 7 an example screen shot is seen in which the user, having started a scan as in FIG. 6 above, can select to cancel ('Cancel') the scan or exit ('Exit'), without changing the scan in process. It will be noted that as the scan proceeds, information about the available external modules can be displayed along with any relevant status information for each.

In FIG. 8, an example screen shot is shown depicting the results of the scan, and providing an external module list, which in this case lists a sound module connected by WiFi, a location (GPS) module connected by Bluetooth, and a social interaction module connected through a radio frequency (RF) link. The user is allowed to configure any of these devices, or to exit without configuring any devices. In addition, when multiple communication connection types or modes are available for a given sensor module, a selection is made by the DCC TV system based upon a preset hierarchy, user profile selections, signal conditions, direct user selection, other factors and / or combinations thereof.

The user interface examples shown in FIG. 5 through FIG. 8 can be directed to display on the DCC TV, and / or to generate a display on a remote device, which may include one or more of the remote external sensing module. Full remote EM content control of the DCC TV is provided in response to generating the user control interface on the remote device which senses the external conditions which control the dynamic content control. This embodiment can be particularly well suited to the control of one or more advertising displays implemented on DCC TV devices, such as by a single EM or multiple sensors within a single EM, or a plurality of EMs having either the same or different sensing capability. In this example, the user interface is for the administrator who is in charge of overseeing what is being output from the DCC TV advertising displays.

It should be noted that for the sake of illustration the preceding interface example figures were made simplistic. However, it should be appreciated that the interaction is configured in at least one embodiment to provide the user with status information about each EM that can be connected, the ability to enable or disable, install or uninstall, any combination of external modules, and in certain embodiments control other aspects of the sensing being performed by the external modules.

It should be appreciated that the programming is executable from the memory which is a tangible (physical) computer readable media that is non-transitory in that it does not merely constitute a transitory propagating signal, but is actually capable of retaining programming, such as within any desired form and number of static or dynamic memory devices. These memory devices need not be implemented to maintain data under all conditions (e.g., power fail) to be considered herein as non-transitory media.

From the description herein, it will be further appreciated that the invention can be embodied in various ways, which include but are not limited to the following.

The present invention provides methods and apparatus for automated control of a DCC TV system in response to environmental feedback from external modules. Inventive teachings can be applied in a variety of apparatus and applications, including but not limited to those described herein.

As can be seen, therefore, the present invention includes the following inventive embodiments among others:
1. A system for dynamic content playback control in response to environmental conditions, comprising: a television configured for outputting selected image and video media; at least one remote external module configured for sensing and analyzing environmental conditions and communicating information to said television over a communication medium; an internet server within said television for communicating according to an internet protocol (IP) over said communication medium with external modules; a computer configured for controlling said television in response to said communication of information from external modules; and programming executable on said computer for: detecting the presence of external modules through said communication medium, pairing with said external module, and updating a database for said computer to represent the presence and allowed input from external modules, configuring the media selection criterion in real time in response to user selection of input from external modules, receiving sense command information from external modules through said communication medium, and dynamically controlling content playback for output by said television in response to said sense command information.
2. The system as recited in embodiment 1, further comprising programming executable on said computer for performing said content selection in response to said sense command information in combination with information retrieved from a user profile.
3. The system as recited in embodiment 1, further comprising programming executable on said computer for performing said content selection in response to said sense command information in combination with information retrieved from usage history.
4. The system as recited in embodiment 1, wherein the apparatus provides remotely controlled dynamic content playback in response to environmental feedback from a plurality of said external modules.
5. The system as recited in embodiment 1, wherein said communication medium comprises a wireless internet protocol.
6. The system as recited in embodiment 1, wherein said external module comprises a general purpose smart electronic device configured with internet connectivity, programmatic capability and which either integrates one or more environmental sensors, or is configured for connection to one or more environmental sensors.
7. The system as recited in embodiment 6, wherein said general purpose smart electronic device is selected from the group of smart devices consisting of smart phones, cell phones, personal digital assistants, netbooks, or notebook computers.
8. The system as recited in embodiment 1, wherein said external module is configured for sensing as selected from the group of sensors consisting of optical, audio, temperature, pressure, precipitation, traffic, infrared (IR), location, motion, image and audience characteristics.
9. The system as recited in embodiment 1, further comprising programming executable on said computer for controlling output settings and modes of said television in response to said sense command information.
10. The system as recited in embodiment 1, wherein said content selection comprises controlling the pull of ad content in response to sensor information received from external modules.
11. The system as recited in embodiment 10, wherein said ad content is locally stored in a memory device or media association with the television.
12. The system as recited in embodiment 1, further comprising programming executable on said computer for performing said user selection of input from said external modules in response to obtaining a user input in answer to a query from said system.
13. An apparatus for dynamic content playback control in response to environmental conditions, comprising: a television configured for outputting selected image and video media; an internet server within said television for communicating according to an internet protocol (IP) over said communication medium with multiple external modules, operating as client devices, which are configured for sensing and analyzing environmental conditions and communicating information to said display subsystem over a communication medium; a computer configured for controlling said television in response to said communication of information from said external modules; and programming executable on said computer for: detecting the presence of said external modules through said internet protocol, pairing with said external modules, and updating a database for said computer to represent the presence and allowed input from said external modules, configuring the media selection criterion in real time in response to user selection of input from each of said external modules, receiving sense command information from said external modules through said internet protocol, and dynamically controlling content playback for output by said television in response to said sense command information.
14. The apparatus as recited in embodiment 13, further comprising programming executable on said computer for performing said content selection in response to said sense command information in combination with information retrieved from a user profile.
15. The apparatus as recited in embodiment 13, further comprising programming executable on said computer for performing said content selection in response to said sense command information in combination with information retrieved from usage history.
16. The apparatus as recited in embodiment 13, wherein said communication medium comprises a wireless internet protocol.
17. The apparatus as recited in embodiment 13, wherein each of said external modules comprises a general purpose smart electronic devices configured with internet connectivity, programmatic capability and which either incorporates one or more environmental sensors, or is configured for connection to one or more environmental sensors.
18. The apparatus as recited in embodiment 17, wherein each of said general purpose smart electronic devices is selected from the group of smart devices consisting of smart phones, cell phones, personal digital assistants, netbooks, or notebook computers.
19. The apparatus as recited in embodiment 13, wherein said content selection comprises controlling the pull of ad content, accessible to said display subsystem, in response to sensor information received from said external modules.
20. A method of dynamic content playback control on a television device configured for outputting image and video media in response to environmental conditions, comprising: operating an internet server within a television device for communicating according to an internet protocol (lP) over a communication medium; detecting the presence of remote external modules as clients through said communication medium; wherein said external modules are configured for sensing and analyzing environmental conditions and communicating information to said television device using IP over said communication medium; pairing with said external modules, and updating a database in said television to represent the presence and allowed input from said external modules; configuring the media selection criterion in real time in response to user selection of input from said external modules; receiving sense command information from said external modules through said communication medium; and dynamically controlling content playback output by said television in response to said sense command information.

An embodiment of the invention is a television device whose content is controlled remotely, providing dynamic content playback, in response to environmental feedback from a remote module.

Another embodiment of the invention is a television device whose content and display modes are controlled in response to the environmental feedback from a remote module.

Another embodiment of the invention is a television device which is configured with an external module engine that has internal programming and communication interfaces for receiving environmental information, or pseudo-commands, from external modules.

Another embodiment of the invention is a television device which is responsive to various forms of environmental feedback.

Another embodiment of the invention is a television device which automatically detects, pairs, and configures itself in response to the presence of new remote external modules.

Another embodiment of the invention is a television device which is coupled to external modules using internet protocol, wireless (e.g., radio frequency (RF), Bluetooth ^{TM}), or other known physical communication medium and protocols.

Another embodiment of the invention is a television device which communicates with external modules that can contain any desired sensor, or combination of sensors, such as optical, audio, temperature, pressure, precipitation (e.g., rain, snow, sleet, hail, etc.), traffic conditions, infrared (IR), location, motion, image sensors (e.g., image / video capture with image processing and /or facial recognition), audience presence, audience size, audience composition, and other sensor elements without limitation.

Embodiments of the present invention are described with reference to flowchart illustration of methods and systems according to embodiments of the invention. These methods and systems can also be implemented as computer program products. In this regard, each block or step of a flowchart, and combinations of blocks (and/or steps) in a flowchart, can be implemented by various means, such as hardware, firmware, and/or software induing one or more computer program instructions embodied in computer-readable program code logic. As will be appreciated, any such computer program instructions may be loaded onto a computer, including without limitation a general purpose computer or special purpose computer, or other programmable processing apparatus to produce a machine, such that the computer program instructions which execute on the computer or other programmable processing apparatus create means for implementing the functions specified in the block(s) of the flowchart(s).

Accordingly, blocks of the flowcharts support combinations of means for performing the specified functions, combinations of steps for performing the specified functions, and computer program instructions, such as embodied in computer-readable program code logic means, for performing the specified functions. It will also be understood that each block of the flowchart illustrations, and combinations of blocks in the flowchart illustrations, can be implemented by special purpose hardware-based computer systems which perform the specified functions or steps, or combinations of special purpose hardware and computer-readable program code logic means.

Furthermore, these computer program instructions, such as embodied in computer-readable program code logic, may also be stored in a computer-readable memory that can direct a computer or other programmable processing apparatus to function in a particular manner, such that the instructions stored in the computer-readable memory produce an article of manufacture including instruction means which implement the function specified in the block(s) of the flowchart(s). The computer program instructions may also be loaded onto a computer or other programmable processing apparatus to cause a series of operational steps to be performed on the computer or other programmable processing apparatus to produce a computer-implemented process such that the instructions which execute on the computer or other programmable processing apparatus provide steps for implementing the functions specified in the block(s) of the flowchart(s).

Although the description above contains many details, these should not be construed as limiting the scope of the invention but as merely providing illustrations of some of the presently preferred embodiments of this invention. Therefore, it will be appreciated that the scope of the present invention fully encompasses other embodiments which may become obvious to those skilled in the art, and that the scope of the present invention is accordingly to be limited by nothing other than the appended claim, in which reference to an element in the singular is not intended to mean "one and only one" unless explicitly so stated, but rather "one or more." All structural and functional equivalents to the element of the above-described preferred embodiment that are known to those of ordinary skill in the art are expressly incorporated herein by reference and are intended to be encompassed by the present claims. Moreover, it is not necessary for a device or method to address each and every problem sought to be solved by the present invention, for it to be encompassed by the present claim. Furthermore, no element, component, or method step in the present disclosure is intended to be dedicated to the public regardless of whether the element, component, or method step is explicitly recited in the claim. No claim element herein is to be construed under the provisions of 35 U.S.C. 112, sixth paragraph, unless the element is expressly recited using the phrase "means for."

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

## Claims

1. A system for dynamic content playback control in response to environmental conditions, comprising:
a television configured for outputting selected image and video media;
at least one remote external module configured for sensing and analyzing environmental conditions and communicating information to said television over a communication medium;
an internet server within said television for communicating according to an internet protocol (IP) over said communication medium with external modules;
a computer configured for controlling said television in response to said communication of information from external modules; and
programming executable on said computer for:
detecting, through said communication medium, that external modules are present;
pairing with said external module and updating a database for said computer to represent that said external modules are present and input is allowed from said external modules;
configuring the media selection criterion in real time in response to user selection of input from external modules;
receiving sense command information from external modules through said communication medium; and
dynamically controlling content playback for output by said television in response to said sense command information.

2. The system as recited in claim 1, further comprising programming executable on said computer for performing said content selection in response to said sense command information in combination with information retrieved from a user profile.

3. The system as recited in claims 1, further comprising programming executable on said computer for performing said content selection in response to said sense command information in combination with information retrieved from usage history.

4. The system as recited in claim 1, wherein the system provides remotely controlled dynamic content playback in response to environmental feedback from a plurality of said external modules.

5. The system as recited in claims 1, wherein said external module comprises a general purpose smart electronic device configured with internet connectivity, programmatic capability and which either integrates one or more environmental sensors, or is configured for connection to one or more environmental sensors.

6. The system as recited in claims 1, wherein said external module is configured for sensing as selected from a group of sensors consisting of optical, audio, temperature, pressure, precipitation, traffic, infrared (lR), location, motion, image and audience characteristics.

7. The system as recited in claims 1, further comprising programming executable on said computer for controlling output settings and modes of said television in response to said sense command information.

8. The system as recited in claim 1, wherein said content selection comprises controlling pull of ad content in response to sensor information received from external modules.

9. The system as recited in claim 1, further comprising programming executable on said computer for performing said user selection of input from said external modules in response to obtaining a user input in answer to a query from said system.

10. An apparatus for dynamic content playback control in response to environmental conditions, comprising:
a television configured for outputting selected image and video media;
an internet server within said television for communicating according to an internet protocol (IP) over said communication medium with multiple external modules, operating as client devices, which are configured for sensing and analyzing environmental conditions and communicating information to said display subsystem over a communication medium;
a computer configured for controlling said television in response to said communication of information from said external modules; and
programming executable on said computer for:
detecting, through said internet protocol, that said external modules are present;
pairing with said external modules and updating a database for said computer to represent that said external modules are present and that input is allowed from said external modules;
configuring the media selection criterion in real time in response to user selection of input from each of said external modules;
receiving sense command information from said external sensor modules through said internet protocol; and
dynamically controlling content playback for output by said television in response to said sense command information.

11. The apparatus as recited in claim 10, further comprising programming executable on said computer for performing said content selection in response to said sense command information in combination with information retrieved from a user profile.

12. The apparatus as recited in claim 10, further comprising programming executable on said computer for performing said content selection in response to said sense command information in combination with information retrieved from usage history.

13. The apparatus as recited in claims 10, wherein each of said external modules comprises a general purpose smart electronic devices configured with internet connectivity, programmatic capability and which either incorporates one or more environmental sensors, or is configured for connection to one or more environmental sensors.

14. The apparatus as recited in claim 10, wherein said content selection comprises controlling ad content pull, accessible to said display subsystem, in response to sensor information received from said external modules.

15. A method of dynamic content playback control on a television device configured for outputting image and video media in response to environmental conditions, comprising:
operating an internet server within a television device for communicating according to an internet protocol (IP) over a communication medium;
detecting, through said communication medium, that remote external modules are present as clients;
wherein said external modules are configured for sensing and analyzing environmental conditions and communicating information to said television device using IP over said communication medium;
pairing with said external modules, and updating a database in said television to represent that said external modules are present and input from said external modules is allowed;
configuring media selection criterion in real time in response to user selection of input from said external modules;
receiving sense command information from said external modules through said communication medium; and
dynamically controlling content playback output by said television in response to said sense command information.
